Europäisches Patentamt

European Patent Office

Office européen des brevets

(19)

(11) Publication number: **0 084 062**
**B1**

# EUROPEAN PATENT SPECIFICATION

(12)

(45) Date of publication of patent specification: **10.07.85**

(21) Application number: **82902762.2**

(22) Date of filing: **27.07.82**

(86) International application number:
**PCT/US82/01034**

(87) International publication number:
**WO 83/00278 03.02.83 Gazette 83/04**

(51) Int. Cl.⁴: **A 23 L 1/36**

(54) BLANCHED PEANUTS WITH GROUND PEANUT SKIN COATING AND PROCESS.

(30) Priority: **27.07.81 US 286450**

(43) Date of publication of application:
**27.07.83 Bulletin 83/30**

(45) Publication of the grant of the patent:
**10.07.85 Bulletin 85/28**

(84) Designated Contracting States:
**GB**

(56) References cited:
**DE-A-2 601 474**
**DE-A-2 705 718**
**GB-A-1 484 518**
**NL-C-7 213 725**
**US-A-2 582 188**
**US-A-2 631 938**
**US-A-3 062 660**
**US-A-3 063 843**
**US-A-3 314 800**
**US-A-3 671 266**
**US-A-4 053 650**
**US-A-4 143 176**
**US-A-4 161 545**
**US-A-4 260 637**
**US-A-4 308 289**

(73) Proprietor: **NABISCO BRANDS INC.**
**Nabisco Brands Plaza**
**Parsippany New Jersey 07054 (US)**

(72) Inventor: **STEELE, Robert L.**
**96 Lewelyn Road**
**Stamford, CT 06902 (US)**
Inventor: **MAJLINGER, Thomas J.**
**26 Exeter Lane**
**Wilton, CT 06897 (US)**

(74) Representative: **Ben-Nathan, Laurence Albert**
**et al**
**c/o MICHAEL BURNSIDE & PARTNERS 2**
**Serjeants' Inn Fleet Street**
**London EC4Y 1HL (GB)**

Courier Press, Leamington Spa, England.

## Description

This invention relates to peanut kernels, and particularly to the treatment thereof, by a process including roasting, to reapply peanut skins removed by blanching in a form which improves the palatability of the product.

As heretofore carried out, the roasting of peanut kernels, separated from their shells or husks, has been effected, either with or without the addition of oil, either before or after removal of the skins from the kernels. When the skins are retained on the peanuts for roasting, they become brittle and are easily dislodged during normal handling and shipment in commercial distribution. When the skins are removed prior to roasting, by a process generally known as blanching, the characteristic flavor contribution of the skins is lost. And, the skins currently have little commercial value beyond use as an additive for animal feed.

In U.S. Patent 2,813,029 to Shirk, there is disclosed a process for coating peanuts still containing their skins. According to the disclosure, peanuts are coated with corn syrup, roasted in oil, and then salted. It is disclosed that the products have improved palatability; however, experience with products of this type has shown that the skins still flake and peel off at a greater rate than would be desired, leaving large amounts of coated, salted skins at the bottom of the packaging container upon opening.

The problem of flaking off of coated peanut skins was recognized by Alikonis, et al. in U.S. Patent 3,062,660, wherein they proposed employing a zein coating to more tightly adhere the skins. In addition to the zein, the coating could also contain antioxidants, flavoring materials, coloring materials, and the like to improve other products characteristics. While coatings applied according to this process do increase the adherence of the skins to the peanuts, the process requires applying the coating as an alcoholic solution of zein plasticized with materials such as fatty acids, mono- and diglycerides of edible fatty acids, and acetylated monoglycerides.

In another attempt to coat peanuts, Green, et al. in U.S. Patent 4,161, 545, disclosed a honey-coated roasted nut product which is prepared by first coating raw nuts with a mixture of honey and water, and then enrobing with a dry mixture of sugar and starch prior to roasting. After roasting and cooling, the nuts may be salted. They disclosed that if there are any breaks in the skins of the nuts, the golden color of the roasted nut and the reddish skins blend together better as one color than in the case when honey is not used. Further, they note that the honey causes the skins to stick better to the nuts, thus resulting in a finished roasted product being more attractive due to the skins being more uniformly attached. Experience shows, however, that significant quantities of skins still flake from the nuts.

In U.S. Patent 2,631,938, Miers, et al. disclosed that the shelf stability of roasted nuts could be improved by applying a coating of a calcium low-methoxyl pectinate film containing salt. The film can also contain sugars, gums, polyhydric alcohol, and the like, as plasticizers, and other additives such as coloring can be added to improve the appearance. The only examples disclosed relate to almonds which are coated after roasting.

In U.S. Patent 3,314,800 to Noznick, et al. there is disclosed a process for adhering a seasoning mix to blanched peanuts prior to dry roasting. According to this process, an aqueous adhesive mixture comprising vital wheat gluten, salt and a food acid is applied to the nuts prior to dry roasting. In addition to these required ingredients, the coating can also contain flavorings, dextrin, and the like. Peanuts processed in this manner do not have the disadvantage of flaking skins; however, because the skins are totally absent, the products lack the characteristic desirable flavor of peanuts with skins.

It is an object of the present invention to provide a peanut product, and a method for preparing it, wherein the characteristic flavor of the peanut skins can be retained without having the associated problem of large quantities of skins flaking off during normal distribution and handling.

Moreover, it is an object of the present invention to eliminate the waste usually associated with blanched peanuts and to provide a blanched peanut product having a non-flaking coating containing peanut skins.

These and other objects are achieved according to the present invention which provides an improved peanut product and a process for preparing it. In its broad aspects, the peanut product comprises blanched peanuts having a coating directly adhered to the exterior surfaces of the peanuts, said coating comprising: finely-ground peanuts skins, pregelatinized starch, a hydrophilic colloid film former, a sugar, and sodium chloride.

The process according to the invention comprises in its broad aspects: tumbling raw, blanched peanuts with pregelatinized starch for a period of time effective to uniformly coat the peanuts; applying an aqueous solution of a hydrophilic colloid film former to the resulting starch-coated raw peanuts and tumbling the peanuts until the resulting coating becomes uniform and sufficiently tacky to adhere particulate seasoning materials; applying particulate seasoning materials comprising ground peanut skins, sugar and sodium chloride to the peanuts while the coating is tacky, and tumbling the peanuts until the seasoning materials uniformly coat the exterior surfaces thereof; and roasting the resulting coated peanuts.

The product and process of the present invention accordingly eliminate the wastage hitherto attendant upon the blanching of peanut kernels, and the skins are incorporated into the finished peanut product to impart a characteristic and desirable flavor thereto.

The peanuts employed according to the present invention are blanched. While blanching can be accomplished in any manner desired, it is preferably done in a manner which will be non-destructive to the flavor and color of the skins. For example, procedures which leave any residue of abrasive or other grit in the skins should not be employed. Where the quality of the skins is reduced by the blanching procedure, high quality skins from a non-destructive blanching process can be substituted for the original skins.

In carrying out the preferred process, which is principally continuous, shelled peanut kernels are blanched by progressing them (e.g., on a conveyor arrangement) successively through a fine water spray; through a drying oven maintained, for example, at a temperature of about 100°C; and between a series of rubber friction rollers. The combined action of the water spray and drying oven causes the skins of the kernels to both shrink and become brittle, so that they loosen and tend to separate from the kernels. The action of the friction rollers, of which there may be a number of pair, is to assure that the skins become properly detached from the kernels so that they may be swept up in a current of air which is drawn through the mass of peanuts and then passed through a filtering bag or separator system to accumulate the skins.

A principal part of the coating according to the invention is a seasoning mix which comprises ground peanut skins, sodium chloride and a sugar. The seasoning mix is preferably prepared by comminuting the skins, such as by grinding, mixing them with fine, granulated sodium chloride and a sugar; and sieving the mix to obtain a uniformly-flowable, particulate, dry seasoning mix.

The skins are comminuted in any suitable manner to achieve a uniform, fine particle size. Commercial comminuting and grinding equipment capable of reducing the skins to a particle size permitting them to pass through an about 32 mesh Tyler Standard, and preferably through a 48 mesh Tyler Standard sieve is suitable. Large particles of ground skins are preferably removed prior to preparing the seasoning mix by suitable sieving means. Most preferably, the ground skins will pass through a 32 mesh Tyler Standard sieve and be retained on a 65 mesh Tyler Standard sieve.

The sodium chloride is preferably finely granulated. One suitable commercially-available granulated salt is Morton's Purex salt, extra fine granulated. This salt contains minor amounts of flow control agents to maintain flowability under humid conditions.

The sugar employed according to the present invention can be any suitably sweet sugar which can be applied as a free-flowing powder of fine particle size. Among the sugars which can be employed are those selected from the group consisting of sucrose, glucose, fructose, invert sugar, corn syrup solids, and high fructose corn syrup solids. The preferred sugar is sucrose. The sugar will preferably be a coating grade sugar having a particle size at least fine as the salt and peanut skin components.

The components of the seasoning mix are preferably dry blended and then sieved to assure uniformly-small particle sizes prior to application to the peanuts. Blending can be achieved in any suitable equipment, such as a V-blender. And, the seasoning mix is preferably sieved to a particle size permitting passage through a 35 mesh Tyler Standard sieve. While other components can be employed in the seasoning mix according to the present invention, it is preferred that the seasoning mix consist essentially of the peanut skins, the sodium chloride and the sugar. According to one preferred embodiment of the invention, citric acid may be added in an amount effective to reduce the degree of browning of the product during roasting; surprisingly, we have found that levels of citric acid of from about 0.1 to about 0.5% based on the weight of the coating are effective for this purpose. In another especially preferred embodiment according to the present invention, the seasoning mix will consist of these three components and contain greater than 19% ground peanut skins.

The coating adheres directly to the exterior surfaces of the peanuts. By this, it is meant that the surfaces of the peanut kernels are not precoated with added oil or other material which may tend to effect the desired tight bond between the coating and surfaces of the peanut kernels. The coating is tightly adhered so that a minimum amount becomes dislodged during commercial handling and packaging, and upon contact with hands during consumption.

To obtain the most attractive end-product, the peanuts are sorted to remove split, cracked and otherwise defective peanuts prior to application of the coating. The peanuts are then charged into a rotatable coating reel or other suitable device which is capable of tumbling the peanut kernels along with added coating materials. This coating can be conducted continuously or batch-wise, as desired.

In the first stage of the coating, pregelatinized starch, such as pregelatinized potato starch is added to the tumbling peanuts at a rate effective to provide a uniform coating over the exterior surfaces of the peanuts. The rate of addition, and the total tumbling time to achieve the uniform coating, will depend upon the size of the batch, the rate of tumbling, and the ratio of starch to peanuts. Typically, the addition of the starch will take from about 5 seconds to about 1 minute and the total tumbling time will take from about 30 seconds to about 2 minutes. Preferably, the starch will comprise from about 0.1 to about 1% of the total weight of the peanut product, and from about 0.5 to about 5.0% based on the weight of the coating.

After application of the uniform coating of starch to the peanuts, an aqueous solution comprising a hydrophilic colloid film former is applied to the tumbling peanuts in an amount and at a rate effective to provide a uniform coating to the exterior surfaces of the peanuts. Tumbling is continued for a period of time effective to render the coating sufficiently tacky to adhere particulate seasoning materials. The exact rate of addition of the film former solution and the tumbling time effective to provide the uniform tacky coating will depend upon the type of hydrophilic film former employed, the rate of tumbling, the batch size, the rate of moisture removal, the concentration of the hydrophilic colloid film former in the solution, and the total amount of solution applied. Typically, however, when employing the preferred materials and amounts, it is found that the solution can be added over a period of from about 15 seconds to about 1 minute with proper uniformity and tackiness achieved within a period of from about 3 to 10 minutes.

The hydrophilic colloid film former can be any of the natural or modified hydrophilic colloid film formers known to the art which are suitably water soluble and provide a tacky consistency during the drying stage. Among the suitable materials which can be employed according to the present invention are those selected from the group consisting of gum acacia, gelatin, guar gum, dextrins, alginates, cellulose derivatives, and vegetable protein fractions. One particularly preferred hydrophilic colloid film former is gum acacia. Where gum acacia is employed, it will typically be prepared as an aqueous solution containing from about 12 to about 25% solids. The solution should be fluid enough to permit uniform application, but not so dilute that excessive tumbling times are required to achieve the desired tacky surface. Typically, the dry weight of gum acacia or other film former will comprise from about 0.25 to about 1.5% of the weight of the final product and from about 2 to about 10% of the weight of the coating.

When the surfaces of the tumbling peanut kernels, coated with the starch and the hydrophilic film former solution, have achieved the necessary degree of tackiness to adhere particulate seasoning materials, the particulate seasoning material as described above is applied in an amount and at a rate effective to uniformly coat the exterior surfaces of the peanuts. Again, the exact time of application and total tumbling to achieve the uniform coating will depend upon a number of factors. Typically, however, the seasoning mix will be added within a period of from about 10 seconds to about one minute, with tumbling being continued for from about 5 seconds to about 30 seconds after complete addition of the dry seasoning mix. Experience will show the person skilled in the art the appropriate time for terminating addition and tumbling.

After the surfaces of the peanuts become uniformly coated and dried to the optimum degree, continued tumbling will dislodge some of the coating materials. Thus, it is preferred to immediately remove the coated product when the surfaces appear uniformly coated with a minimum or remaining coating material still unattached. It is preferred that the coating material be applied in an amount of from about 5 to about 15% based upon the weight of the final product.

Most preferably, the final product will contain at least 5 and less than 10% of the coating material.

When substantially all of the seasoning material has been taken up by the kernels, the resulting coated peanuts are transferred to a roasting oven, preferably by an appropriate conveyor device which transports them in a continuous progression through a roasting oven maintained at a temperature, for example of from about 150° to about 180°, preferably about 170°C. This step causes not only a roasting of the meat of the peanut kernels, but also causes this coating containing peanut skins to unite with the kernel and become substantially integral therewith, giving the finished peanut product, a mottled and textured surface appearance.

The seasoning imparts a characteristic savory flavor to the kernels; and, as has been already touched on above, the method of the invention has the advantage that it eliminates the waste hereto created by the blanching of kernels, and provides a blanched peanut product which is not only seasoned but has some of the characteristic taste attributes associated with unblanched nuts.

The following example is provided to illustrate and explain what is presently considered the best mode for carrying out the invention. The data is for illustrative purposes to guide the person of ordinary skill in the art. Unless otherwise indicated, all parts and percentages are by weight.

Example

This example describes the preparation of peanuts seasoned according to the invention.

Shelled, raw unblanched peanuts are contacted with a fine spray of water to thoroughly wet the skins. The wetted peanuts are then dried in a convection oven at a temperature of about 100°C to loosen the skins and cause them to become brittle. The peanuts are then blanched by passing between rubber friction rollers. A current of air is passed through the resulting mass of blanched peanuts and skins to remove the skins. The skins are then separated from the air current and collected in a filtering bag.

The skins are finely ground through a Stokes Tornado mill at high speed using a No. 0.029 Screen. The resulting ground peanut skins all pass through a 32 mesh Tyler Standard sieve and all are retained on a 65 mesh Tyler Standard sieve. The peanuts and skins are then recombined with the following other ingredients in the amounts shown, according to the procedure which follows the table:

| Ingredient | Amount |
| --- | --- |
| Blanched peanuts | 1000 grams |
| Pregelatinized starch | 1.7 grams |
| Gum acacia solution (18.4% solids) | 35 ml. |
| Ground peanut skins | 17.5 grams |
| Fine granulated/Castor sucrose | 50 grams |
| Sodium chloride | 12 grams |

The peanuts are charged into a rotatable coating pan equipped with ribs. Rotation of the pan is begun, the pregelatinized starch is added, and the peanuts and starch are tumbled in the pan for about one minute. The gum acacia solution is then added gradually to the tumbling peanuts to provide a uniform coating; and tumbling is continued for about 3½ minutes after the start of addition, until the surfaces of the peanuts become uniformly tacky. When the proper degree of tackiness is achieved, a blend of the peanut skins, sucrose and sodium chloride is then slowly added to the tumbling peanuts. The blend was previously prepared by mixing and sieving through a 35 mesh Tyler Standard sieve. The tumbling is terminated after about 45 seconds from the start of addition of the blend; and the resulting, uniformly-coated peanuts are immediately removed from the pan.

The peanuts are then roasted by continuously conveying them on an open mesh conveyor through a roasting oven maintained at approximately 170°C. After roasting in the oven, the product is cooled on the conveyor by drawing room temperature air past the peanuts held thereon. The total roasting and cooling operation takes about 20 minutes.

The product is packed in nitrogen gas flushed, flexible laminated foil pouches.

The above description is for the purpose of describing the invention to people having ordinary skill in the art to enable them to practice it. The scope of the invention is defined by the following claims.

## Claims

1. A peanut product comprising blanched peanuts having a coating directly adhered to the exterior surfaces of the peanuts, said coating comprising: finely ground peanut skins; pregelatinized starch; a hydrophilic colloid film former, a sugar, and sodium chloride.

2. A peanut product according to Claim 1 wherein the peanut skins comprise greater than 19% of the weight of the coating.

3. A peanut product according to Claim 2 wherein the coating comprises from at least 5 to less than 10% of the weight of the product.

4. A peanut product according to Claim 1 wherein the coating further comprises citric acid in an amount effective to reduce the degree of browning during roasting.

5. A peanut product according to Claim 1 wherein the peanut skins are ground to a particle size permitting them to pass through a 32 mesh Tyler Standard sieve.

6. A peanut product according to Claim 5 wherein the peanut skins are ground to a particle size permitting them to be retained on a 65 mesh Tyler Standard sieve.

7. A peanut product according to Claim 1 wherein the hydrophilic colloid film former comprises gum acacia, gelatin, guar gum, dextrins, alginates, cellulose derivatives, or vegetable protein fractions.

8. A peanut product according to Claim 7 wherein the hydrophilic colloid film former comprises gum acacia.

9. A peanut product according to Claim 1 wherein the sugar comprises sucrose, glucose, fructose, invert sugar, corn syrup solids or high fructose corn syrup solids.

10. A peanut product according to Claim 9 wherein the sugar comprises sucrose.

11. A peanut product according to Claim 10 wherein the peanut skins comprise greater than 19% of the weight of the coating.

12. A peanut product according to Claim 11 wherein the coating comprises from at least 5 to less than 10% of the weight of the product.

13. A peanut product according to Claim 12 wherein the peanut skins are ground to a particle size permitting them to pass through a 32 mesh Tyler Standard sieve and be retained on a 65 mesh Tyler Standard sieve.

14. A peanut product according to Claim 13 wherein the hydrophilic colloid film former comprises gum acacia.

15. A process for preparing a peanut product comprising blanched peanuts having a coating containing ground peanut skins directly adhered to the exterior surfaces of the peanuts, the process comprising:

tumbling raw, blanched peanuts with pregelatinized starch for a period of time effective to uniformly coat the peanuts;

applying an aqueous solution of hydrophilic colloid film former to the resulting starch-coated raw peanuts and tumbling the peanuts until the resulting coating becomes uniform and sufficiently tacky to adhere particulate seasoning materials;

applying particulate seasoning materials comprising ground peanut skins, a sugar, and sodium chloride to the peanuts while the coating is tacky and tumbling the peanuts until the seasoning materials uniformly coat the exterior surfaces thereof; and

roasting the resulting coated peanuts.

16. A process according to Claim 15, wherein the peanut skins comprise greater than 19% of the weight of the coating.

17. A process according to Claim 16 wherein the coating comprises from at least 5 to less than 10% of the weight of the product.

18. A process according to Claim 15 wherein the coating further comprises citric acid in an amount effective to reduce browning during roasting.

19. A process according to Claim 15 wherein the peanut skins are ground to a particle size permitting them to pass through a 32 mesh Tyler Standard sieve.

20. A process according to Claim 19 wherein the peanut skins are ground to a particle size permitting them to be retained on a 65 mesh Tyler Standard sieve.

21. A process according to Claim 15 wherein the hydrophilic colloid film former comprises gum acacia, gelatin, guar gum, dextrins, alginates, cellulose derivatives, or vegetable protein fractions.

22. A process according to Claim 21 wherein the hydrophilic film former comprises gum acacia.

23. A process according to Claim 15 wherein the sugar comprises sucrose, glucose, fructose, invert sugar, corn syrup solids or high fructose corn syrup solids.

24. A process according to Claim 23 wherein the sugar comprises sucrose.

25. A process according to Claim 24 wherein the peanut skins comprise greater than 19% of the weight of the coating.

26. A process according to Claim 25 wherein the coating comprises from at least 5 to less than 10% of the weight of the product.

27. A process according to Claim 26 wherein the peanut skins are ground to a particle size permitting them to pass through a 32 mesh Tyler Standard sieve and be retained on a 65 mesh Tyler Standard sieve.

28. A process according to Claim 27 wherein the hydrophilic colloid film former comprises gum acacia.

29. A product prepared according to the process of either of Claims 15 or 28.

**Revendications**

1. Un produit à base de cacahuètes constitué de cacahuètes mondées recouvertes d'un enrobage adhérant directement aux surfaces externes des cacahuètes, le dit enrobage étant constitué: de téguments de cacahuètes finement broyés; d'amidon prégélatinisé; d'un agent filmogène colloïdal hydrophile, d'un sucre, et de chlorure de sodium.

2. Un produit à base de cacahuètes selon la revendication 1 caractérisé en ce que les téguments de cacahuètes représentent plus de 19% du poids de l'enrobage.

3. Un produit à base de cacahuètes selon la revendication 2 caractérisé en ce que l'enrobage représente au moins 5 et moins de 10% du poids du produit.

4. Un produit à base de cacahuètes selon la revendication 1 caractérisé en ce que l'enrobage comporte en outre de l'acide citrique en quantité suffisante pour réduire le degré de brunissement lors du grillage.

5. Un produit à base de cacahuètes selon la revendication 1 caractérisé en ce que les téguments de cacahuètes sont broyés jusqu'à une taille de particule leur permettant de passer à travers un tamis de 32 mesh Norme Tyler.

6. Un produit à base de cacahuètes selon la revendication 5 caractérisé en ce que les téguments de cacahuètes sont broyés jusqu'à une taille de particule leur permettant d'être retenues par un tamis de 65 mesh Norme Tyler.

7. Un produit à base de cacahuètes selon la revendication 1 caractérisé en ce que l'agent filmogène colloïdal hydrophile est représenté par un produit choisi dans le groupe constitué par la gomme arabique, la gélatine, la gomme de guar, les dextrines, les alginates, les dérivés de cellulose, et les fractions protéiniques végétales.

8. Un produit à base de cacahuètes selon la revendication 7 caractérisé en ce que l'agent filmogène colloïdal hydrophile est représenté par la gomme arabique.

9. Un produit à base de cacahuètes selon la revendication 1 caractérisé en ce que le sucre est représenté par un produit choisi dans le groupe constitué par le saccharose, le glucose, le fructose, le sucre inverti, l'extrait sec de sirop de maïs et l'extrait sec de sirop de maïs à forte teneur en fructose.

10. Un produit à base de cacahuètes selon la revendication 9, caractérisé en ce que le sucre est représenté par le saccharose.

11. Un produit à base de cacahuètes selon la revendication 10 caractérisé en ce que les téguments de cacahuètes représentent plus de 19% du poids de l'enrobage.

12. Un produit à base de cacahuètes selon la revendication 11 caractérisé en ce que l'enrobage représente au moins 5 et moins de 10% du poids du produit.

13. Un produit à base de cacahuètes selon la revendication 12 caractérisé en ce que les téguments de cacahuètes sont broyés jusqu'à une taille de particule leur permettant de passer à travers un tamis de 32 mesh Norme Tyler et d'être retenues par un tamis de 65 mesh Norme Tyler.

14. Un produit à base de cacahuètes selon la revendication 13 caractérisé en ce que l'agent filmogène colloïdal hydrophile est représenté par la gomme arabique.

15. Un procédé de préparation d'un produit à base de cacahuètes constitué de cacahuètes mondées recouvertes d'un enrobage contenant des téguments de cacahuétes broyés, adhérant directement aux surfaces externes des cacahuétes, le procédé comportant:

Un passage des cacahuètes crues, mondées, dans un appareil à tambour, avec de l'amidon prégélatinisé, d'une durée suffisante pour enrober uniformément les cacahuètes;

une application d'une solution aqueuse d'agent filmogène colloïdal hydrophile sur les cacahuètes crues enrobées d'amidon obtenues, et un passage des cacahuètes dans un appareil à tambour jusqu'à ce que l'enrobage obtenu devienne uniforme et suffisament collant pour adhérer aux substances particulaires d'assaisonnement;

une application sur les cacahuètes de substances particulaires d'assaisonnement comprenant des téguments de cacahuètes broyés, un sucre, et du chlorure de sodium, pendant que l'enrobage est collant et un passage des cacahuètes dans un appareil à tambour jusqu'à ce que les substances d'assaisonnement enrobent uniformément les surfaces externes de celles-ci; et un grillage des cacahuètes enrobées obtenues.

16. Un procédé selon la revendication 15 caractérisé en ce que les téguments de cacahuètes représentent plus de 19% du poids de l'enrobage.

17. Un procédé selon la revendication 16 caractérisé en ce que l'enrobage représente au moins 5 et moins de 10% du poids du produit.

18. Un procédé selon la revendication 15 caractérisé en ce que l'enrobage comporte en outre de l'acide citrique en quantité suffisante pour réduire le degré de brunissement lors du grillage.

19. Un procédé selon la revendication 15 caractérisé en ce que les téguments de cacahuètes sont broyés jusqu'à une taille de particule leur permettant de passer à travers un tamis de 32 mesh Norme Tyler.

20. Un procédé selon la revendication 19 caractérisé en ce que les téguments de cacahuètes sont broyés jusqu'à une taille de particule leur permettant d'être retenues par un tamis de 65 mesh Norme Tyler.

21. Un procédé selon la revendication 15 caractérisé en ce que l'agent filmogène colloïdal hydrophile est représenté par un produit choisi dans le groupe constitué par la gomme arabique, la gélatine, la gomme de guar, les dextrines, les alginates, les dérivés de cellulose, et les fractions protéiniques végétales.

22. Un procédé selon la revendication 21 caractérisé en ce que l'agent filmogène hydrophile est représenté par la gomme arabique.

23. Un procédé selon la revendication 15 caractérisé en ce que le sucre est représenté par un produit choisi dans le groupe constitué par le saccharose, le glucose, le fructose, le sucre inverti, l'extrait sec de sirop de maïs et l'extrait sec de sirop de maïs à forte teneur en fructose.

24. Un procédé selon la revendication 23 caractérisé en ce que le sucre est représenté par le saccharose.

25. Un procédé selon la revendication 24 caractérisé en ce que les téguments de cacahuètes représentent plus de 19% du poids de l'enrobage.

26. Un procédé selon la revendication 25 caractérisé en ce que l'enrobage représente au moins 5 et moins de 10% du poids du produit.

27. Un procédé selon la revendication 26 caractérisé en ce que les téguments de cacahuètes sont broyés jusqu'à une taille de particule leur permettant de passer à travers un tamis de 32 mesh Norme Tyler et d'être retenues par un tamis de 65 mesh Norme Tyler.

28. Un procédé selon la revendication 27 caractérisé en ce que l'agent filmogène colloïdal hydrophile est représenté par la gomme arabique.

29. Un produit préparé selon le procédé de l'une des revendications 15 ou 28.

## Patentansprüche

1. Erdnusserzeugnis aus enthäuteten Erdnüssen mit einem direkt an deren Aussenflächen anhaftenden Ueberzug, wobei dieser Ueberzug feingemahlene Erdnusshäutchen, angekleisterte Stärke, einen hydrophilen kolloidalen Filmbildner, einen Zucker und Natriumchlorid umfasst.

2. Erdnusserzeugnis nach Anspruch 1, worin die Erdnusshäutchen mehr als 19 Gew.-% des Ueberzugs ausmachen.

3. Erdnusserzeugnis nach Anspruch 2, worin der Ueberzug mindestens 5 bis weniger als 10 Gew.-% des Erzeugnisses ausmacht.

4. Erdnusserzeugnis nach Anspruch 1, worin der Ueberzug ferner Zitronensäure in einer zur Verringerung des Bräunungsgrads beim Rösten wirksamen Menge enthält.

5. Erdnusserzeugnis nach Anspruch 1, worin die Erdnusshäutchen auf eine Teilchengrösse vermahlen sind, die sie durch ein Sieb mit 0,50 mm Sieböffnung (32 mesh Tyler Standard) passieren lässt.

6. Erdnusserzeugnis nach Anspruch 5, worin die Erdnusshäutchen auf eine Teilchengrösse vermahlen sind, die sie auf einem Sieb von 0,211 mm Sieböffnung (65 mesh Tyler Standard) zurückbleiben lässt.

7. Erdnusserzeugnis nach Anspruch 1, worin der hydrophile kolloidale Filmbildner einen aus der Akaziengummi, Gelatine, Guargummi, Dextrine, Alginate, Cellulosederivate und pflanzliche Proteinfraktionen umfassenden Gruppe ausgewählten Bestandteil darstellt.

8. Erdnusserzeugnis nach Anspruch 7, worin der hydrophile kolloidale Filmbildner Akaziengummi darstellt.

9. Erdnusserzeugnis nach Anspruch 1, worin der Zukker einen aus der Saccharose, Glucose, Fruktose, Invertzucker, Maisstärkesirupfeststoffe und hoch fruktosehaltige Maisstärkesirupfeststoffe umfassenden Gruppe ausgewählten Bestandteil darstellt.

10. Erdnusserzeugnis nach Anspruch 9, worin der Zukker Saccharose darstellt.

11. Erdnusserzeugnis nach Anspruch 10, worin dei Erdnusshäutchen mehr als 19 Gew.-% des Ueberzugs ausmachen.

12. Erdnusserzeugnis nach Anspruch 11, worin der Ueberzug mindestens 5 bis weniger als 10 Gew.-% des Erzeugnisses ausmacht.

13. Erdnusserzeugnis nach Anspruch 12, worin die Erdnusshäutchen auf eine Teilchengrösse vermahlen sind, die sie durch ein Sieb mit 0,50 mm Sieböffnung (32 mesh Tyler Standard) passieren und auf einem Sieb mit 0,211 mm Sieböffnung (65 mesh Tyler Standard) zurückbleiben lässt.

14. Erdnusserzeugnis nach Anspruch 13, worin der hydrophile kolloidale Filmbildner Akaziengummi darstellt.

15. Verfahren zur Herstellung eines Erdnusserzeugnisses aus enthäuteten Erdnüssen mit einem vermahlene, direkt an deren Aussenflächen anhaftende Erdnusshäutchen enthaltenden Ueberzug, welches, darin besteht, dass man: rohe enthäutete Erdnüsse für einen zum gleichmässigen Ueberziehen der Erdnüsse wirksamen Zeitraum mit angekleisterter Stärke trommelt,

eine wässrige Lösung eines hydrophilen kolloidalen Filmbildners aud die so erhaltenen, mit Stärke überzogenen rohen Erdnüsse aufbringt und diese trommelt, bis der entstandene Ueberzug gleichförmig und genügend klebrig für das Anhaften teilchenförmiger Würzstoffe wird, teilchenförmige, vermahlene Erdnusshäutchen, einen Zucker und Natriumchlorid enthaltende Würzstoffe auf die Erdnüsse aufbringt, solange der Ueberzug klebrig ist, und die Erdnüsse trommelt, bis die Würzstoffe deren Aussenflächen gleichförmig überziehen und

die so erhaltenen überzogenen Erdnüsse röstet.

16. Verfahren nach Anspruch 15, worin die Erdnusshäutchen mehr als 19 Gew.-% des Ueberzugs ausmachen.

17. Verfahren nach Anspruch 16, worin der Ueberzug mindestens 5 bis weniger als 10 Gew.-% des Erzeugnisses ausmacht.

18. Verfahren nach Anspruch 15, worin der Ueberzug ferner Zitronensäure in einer zur Verringerung des Bräunens beim Rösten wirksamen Menge enthält.

19. Verfahren nach Anspruch 15, worin die Erdnusshäutchen auf eine Teilchengrösse vermahlen sind, die sie durch ein Sieb mit 0,50 mm Sieböffnung (32 mesh Tyler Standard) passieren lässt.

20. Verfahren nach Anspruch 19, worin die Erdnusshäutchen auf eine Teilchengrösse vermahlen sind, die sie auf einem Sieb mit 0,211 mm Sieböffnung (65 mesh Tyler Standard) zurückbleiben lässt.

21. Verfahren nach Anspruch 15, worin der hydrophile kolloidale Filmbildner einen aus der Akaziengummi, Gelatine, Guargummi, Dextrine, Alginate, Cellulosederivate und pflanzliche Proteinfraktionen umfassenden Gruppe ausgewählten Bestandteil darstellt.

22. Verfahren nach Anspruch 21, worin der hydrophile Filmbildner Akaziengummi darstellt.

23. Verfahren nach Anspruch 15, worin der Zucker einen aus der Saccharose, Glucose, Fruktose, Invertzucker, Maisstärkesirupfeststoffe und hoch fruktosehaltige Maisstärkesirupfeststoffe umfassenden Gruppe ausgewählten Bestandteil darstellt.

24. Verfahren nach Anspruch 23, worin der Zucker Saccharose darstellt.

25. Verfahren nach Anspruch 24, worin die Erdnusshäutchen mehr als 19 Gew.-% des Ueberzugs ausmachen.

26. Verfahren nach Anspruch 25, worin der Ueberzug mindestens 5 bis weniger als 10 Gew.-% des Erzeugnisses ausmacht.

27. Verfahren nach Anspruch 26, worin die Erdnusshäutchen auf eine Teilchengrösse vermahlen sind, die sie durch ein Sieb mit 0,50 mm Sieböffnung (32 mesh Tyler Standard) passieren und auf einem Sieb mit 0,211 mm Sieböffnung (65 mesh Tyler Standard) zurückbleiben lässt.

28. Verfahren nach Anspruch 27, worin der hydrophile kolloidale Filmbildner Akaziengummi darstellt.

29. Gemäss dem Verfahren nach Anspruch 15 oder 28 hergestellte Erzeugnisse.